# EUROPÄISCHE PATENTANMELDUNG

(11) **EP 0 689 270 A1**
(43) Veröffentlichungstag der Anmeldung: **27.12.1995**
(21) Anmeldenummer: 95108566.1
(22) Anmeldetag: 03.06.1995
(51) Int. Cl.: H02G 3/04

(54) **Kanalelement für einen Kabelkanal**

(30) Priorität: 23.06.1994 CH 2005/94
(71) Anmelder: LANZ OENSINGEN AG, CH-4702 Oensingen (CH)
(72) Erfinder: Mühletaler, Erhard, CH-3314 Schalunen (CH)
(74) Vertreter: OK pat AG

(57) **Zusammenfassung**

Das Kanalelement (100), aus welchem hochbelastbare Kabelkanäle aufgebaut werden, weist einen Elementboden (102) und mindestens eine, meist aber zwei seitliche Wandungen (104) auf. Um das Durchhängen bzw. die vertikale Durchbiegung des Kanalelementes (100) bzw. des Kabelkanals über seine Länge zwischen zwei Abstützstellen zu vermindern, wird die Biegesteifigkeit des Kanalelementes (100) erhöht, indem man den Elementboden (102) mit längs verlaufenden verstärkenden Verformungen, beispielsweise Sicken (108) versieht.

## Beschreibung

Die Erfindung betrifft ein Kanalelement für einen Kabelkanal, mit einem Elementboden und mit mindestens einer seitlichen Elementwandung

Kabelkanäle, welche aus einzelnen, längs hintereinandergereihten Kanalelementen zusammengestellt werden, sind Einrichtungen zur Aufnahme von Leitungen, welche sich im Inneren oder Aeusseren von Bauwerken erstrecken. Solche Einrichtungen werden gesamthaft als Kabelträger bezeichnet und sind im speziellen unter Namen wie Kabelkanal, Kabelrinne, Kabelwanne, Kabelbahn, Kabelpritsche oder Kabelleiter bekannt, wobei die verschiedenen Bezeichnungen annähernd den verschiedenen Ausbildungsformen entsprechen. Unter Kabelkanälen versteht man insbesondere Einrichtungen mit einem durchgehenden, flachen Boden, der ggf. Durchbrüche aufweisen kann. Bei den in Kabelträgern aufgenommen Leitungen handelt es sich im allgemeinen um Elektrokabel, die je nach Fall in unterschiedlichsten Anzahlen, Dimensionen und Gewichten vorhanden sein können. Die Kabelträger können aber auch für andere flexible Leitungen, beispielsweise für Schläuche mit Flüssigkeiten oder Gasen, verwendet werden.

Wie allgemein bekannt, werden bei der Montage der Kabelkanäle die einzelnen Elemente mittels Konsolen (Auslegern) an Wänden oder Pfeilern befestigt, wobei für die Stossverbindungen an den Schmalseiten oft besondere Verbindungsorgane (Stossleisten, Platten) vorgesehen sind.

Die Kanalelemente weisen im allgemeinen an den Kanalböden und oft auch an den Seitenwänden Durchbrüche auf. Diese Durchbrüche dienen verschiedenen Zwecken, wie der Gewichtsreduktion, der Belüftung der Leitungen, um deren Ueberhitzung zu vermeiden, dem Abzweigen einzelner Kabel sowie der Aufnahme von Befestigungselementen wie Schraubenbolzen, mittels welchen Trennwände eingebaut oder die Kanalelemente auf den Konsolen befestigt werden.

Kanalelemente werden aus Metall wie verzinktem Stahlblech oder aber aus Kunststoff hergestellt, das letztere insbesondere dann, wenn die Kabelkanäle wenig Gewicht zu tragen haben oder in chemisch agressiver Umgebung verwendet werden. Die Herstellung der metallischen Kanalelemente erfolgt im allgemeinen durch spanlose Formgebung und Ausstanzung von Durchbrüchen, während bei der Herstellung von Kanalelementen aus Kunststoff meist direkt die endgültige Form erzeugt wird.

Unter dem Gewicht der Leitungen bzw. Kabel und natürlich auch unter ihrem Eigengewicht biegen sich die Kabelkanäle bzw. die Kanalelemente sowohl in ihren Querschnittsebenen wie auch in ihren Längsschnittebenen durch. Im folgenden werden die Durchbiegung in den Querschnittsebenen als Querdurchbiegung, diejenige in den Längsschnittebenen als Längsdurchbiegung bezeichnet. Die Quer- und die Längsdurchbiegungen dürfen nicht zu gross sein, einerseits aus ästhetischen Gründen, aber vor allem, damit die zulässige Materialbeanspruchung nicht überschritten wird. Zur Begrenzung der Querdurchbiegung wurden bereits Vorschläge gemacht, obwohl diese generell wegen der relativ geringen Breite der Kanalelemente weniger bedeutend ist als die Längsdurchbiegung. Die letztere dagegen liess sich bisher - bei gegebener Stützweite und Bodenbelastung - praktisch nur mit entsprechend bemessener Höhe der Seitenwände beherrschen bzw. begrenzen, abgesehen von wie üblich eingerollten oder gefalzten oberen Längs-rändern, die etwas zur Längssteifigkeit beitragen. Natürlich möchte man jedoch aus wirtschaftlichen Gründen möglichst grosse Stützweiten und/oder nicht zu hohe Seitenwände anstreben.

Die Aufgabe der Erfindung wird somit darin gesehen, ausgehend vom beschriebenen Stand der Technik ein Kanalelement der eingangs genannten Art zuschaffen, das bei hoher Belastbarkeit und nicht übermässiger Bauhöhe ein geringes Eigengewicht aufweist und unter der Belastung durch die darin befindlichen Leitungen nur minimale Längsdurchbiegungen erleidet. Es sollen also bei gegebenem Materialgewicht eine möglichst hohe Tragfähigkeit und damit weitere Stützabstände erreicht werden.

Diese Aufgabe wird erfindungsgemäss gelöst durch die Merkmale des kennzeichnenden Teils des Patentanspruchs 1. Demnach ist das Kanalelement an seinem Boden mit in Kanal-Längsrichtung verlaufenden Verformungen versehen, welche zur Verstärkung gegen eine Längsdurchbiegung beitragen.

Bevorzugte Ausbildungen und konstruktive Ausführungsvarianten des erfindungsgemässen Kanalelementes sind in den abhängigen Ansprüchen angegeben.

Durch die erfindungsgemässe Gestaltung erhält man ein hochbelastbares Kabelkanal-Element, das in Längsrichtung gesehen eine verhältnismässig hohe Biegesteifigkeit besitzt, ohne dass wie bei den bekannten Kanalelementen zu hohe und/oder zu kräftige Seitenwände, für welche eine entsprechende Werkstoffmenge benötigt wird, erforderlich sind. Dies wird erreicht, indem man bei praktisch gleichem Materialaufwand bzw. Eigengewicht das massgebliche Trägheitsmoment erhöht. Demzufolge kann der Abstand der Konsolen, auf denen der Kabelkanal bzw. die Kanalelemente aufliegen, grösser sein als bei bekannten Kanalelementen. Es werden also Einsparungen bei der Anzahl Konsolen und vor allem an Montagearbeit erzielt. Diese Einsparungen können sehr beträchtlich sein und allfällige geringe Mehrkosten bei der Herstellung der versteiften Kanalelemente bei weitem kompensieren.

Obwohl bereits eine einzige, in Längsrichtung durchgehende Verformung zu einer Verbesserung der Biegesteifigkeit führt, werden im allgemeinen je nach den Abmessungen des Kanalelementes mehrere parallel verlaufende Verformungen vorgesehen.

Zur Vereinfachung der Montage kann es zweckmässig sein, die Endbereiche des Elementbodens unverformt zu lassen; die Stossverbindungen der Kanalelemente können dann mit den gleichen Mitteln durchgeführt werden wie bei den bisher üblichen Elementen mit flachem Boden.

Bevorzugte Verformungen sind in Längsrichtung verlaufende Sicken, welche an metallischen Kanalelementen durch Walzen (Rollen) oder Tiefziehen erzeugt werden können, während sie bei Kunststoff-Kanalelementen während der ursprünglichen Formgebung (Extrudieren) hergestellt werden. Solche Sicken können als Innensicken oder als Aussensicken ausgebildet sein, wobei ihre konvexe Fläche im ersten Fall nach oben, d.h. zum Innern des Kabelkanals, im zweiten Fall nach unten gerichtet ist.

Aussensicken haben den Vorteil, dass man eine plane, durchgehende Auflagefläche für die Kabel erhält. Innensicken ergeben dagegen Kanalelemente mit ebener unterer Auflagefläche, so dass diese problemlos auf den Konsolen aufliegen. Innensicken können daher durchgehend angebracht werden. Sie sind dann einfacher zu erzeugen als begrenzte Sicken, die sich nicht über die gesamte Länge des Kanalelementes erstrecken. Ferner können Innensicken als Unterteilung des Kanalbodens in mehrere parallele Sektoren zur getrennten Führung der Kabel dienen.

Um belüftete Kanalelemente mit Durchbrüchen im Elementboden zu erhalten, können in Querrichtung nebeneinander liegende Reihen von Sicken abwechselnd mit Reihen von Durchbrüchen vorgesehen sein. Aus Gründen der Biegesteifigkeit in Querrichtung ist es allerdings besser, in jeder der Reihen abwechselnd fluchtende Sicken und Durchbrüche vorzusehen; mit Vorteil werden nebeneinanderliegende Reihen in Längsrichtung versetzt angeordnet, so dass in jedem Querschnitt Sicken und Durchbrüche vorhanden sind. Damit verhindert man eine stellenweise Schwächung des Kanalelementes und erhält gleichzeitig eine optimale Belüftung.

Eine weitere Ausführungsform, mit welcher man eine besonders gute Belüftung der Leitungen erzielt, kann wie folgt hergestellt sein: Anstelle einer Sicke wird ein länglicher, durch Stanzung erzeugter Durchbruch vorgesehen. Die Stanzung verläuft aber nicht um den ganzen Rand des Durchbruchs, sondern nur entlang der schmalen Endbereiche und einer der beiden Längsseiten. Der lappenartige Bereich des Elementbodens, der durch diese Teilausstanzung entsteht, wird um etwa 90° aus der Ebene des Bodens ausgebogen, so dass er eine Art verstärkender Rippe bildet. Um eine Beschädigung der Leitungen durch die Kanten dieser Rippen zu verhindern, kann die Ausbiegung nach unten erfolgen. Es ist aber auch möglich, eine geeignete Verformung der Lappen vorzusehen und diese nach oben auszubiegen. Es liegt auf der Hand, dass sich derartige Verformungen nicht ohne Unterbruch über die ganze Länge eines Kanalelementes erstrecken können; mit Vorteil werden sie daher in Längsrichtung versetzt angeordnet.

Die vorerwähnten Ausführungsbeispiele des erfindungsgemässen Kanalelementes sowie deren Eigenschaften und Vorteile werden im folgenden mit Bezug auf die Zeichnung näher beschrieben.

Es zeigt:
- Fig. 1: ein erstes Ausführungsbeispiel eines Kanalelementes, mit einer Sicke als Verformung,im Querschnitt;
- Fig. 2: ebenfalls im Querschnitt ein zweites Ausführungsbeispiel, mit Sicken als Verformung des Elementbodens sowie mit Durchbrüchen im Elementboden für die Belüftung;
- Fig. 3: eine dritte Variante eines Kanalelementes, mit Sicken als Verformung des Elementbodens sowie mit Durchbrüchen, welche in Längsrichtung zu den Sicken versetzt angeordnet sind, in einem Schaubild mit teilweise weggebrochener Seitenwand;
- Fig. 4: ein viertes Beispiel, mit Sicken, die sich nicht bis zu den Enden erstrecken, in einem Schaubild mit teilweise weggebrochener Seitenwand;;
- Fig. 5: ein fünftes Ausführungsbeispiel, mit teilausgestanzten, ausgebogenen Verformungen des Elementbodens, im Querschnitt;
- Fig. 5a: das in Fig. 5 dargestellte Kanalelement aussschnittweise von oben gesehen; und
- Fig. 6: eine Variante des in den Fig. 5 und 5a dargestellten Kanalelementes im Querschnitt.

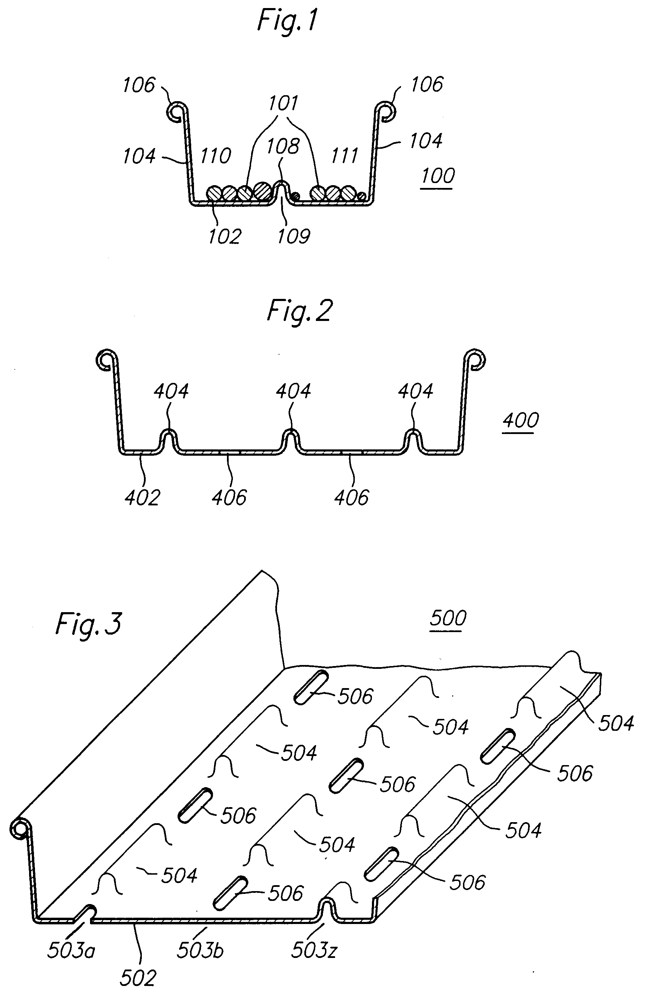

Das Kanalelement 100 nach Fig. 1 weist einen Elementboden 102 und zwei seitliche Elementwandungen 104 auf. Man erkennt auch die im Kanalelement 100 aufgenommenen Leitungen 101. Die Elementwandungen 104 streben leicht auseinander, um eine Stapelung mehrerer Kanalelemente 100 bei der Lagerhaltung zu ermöglichen. An ihrem oberen Rand sind die Elementwandungen 104 mit einer Biegung oder Bördelung 106 versehen, um Verletzungen sowohl der handhabenden Personen als auch der Leitungen 101 zu vermeiden.

Der sonst ebene Elementboden 102 weist als Verformung eine in Längsrichtung des Kanalelements 100 verlaufende Sicke 108 auf. Die Sicke 108 ist als Innensicke ausgebildet, d.h. ihre konvexe Fläche ist zum Inneren des Kanalelementes gerichtet, so dass der Elementboden 102 eine ebene Auflagefläche, unterbrochen durch einen Hohlraum 109 (Längsnut) unterhalb der Sicke 108 bildet. Die Sicke 108 erhöht das Trägheitsmoment der Querschnittsfläche des Kanalelements 100 und dient, wie weiter oben ausgeführt, zur Erhöhung der Biegesteifigkeit des Kanalelements 100 bzw. zur Verminderung einer Längsdurchbiegung, welche vom Eigengewicht des Kanalelements und von der Belastung durch die Leitungen 101 verursacht wird. Der Querschnitt zeigt deutlich, dass man mit einem unbedeutenden Mehraufwand an Material und damit einem unbedeutend höheren Eigengewicht ein Kanalelement 100 mit einer verbesserten Biegesteifigkeit erhält, das höher belastbar ist als ein entsprechendes Kanalelement ohne Sicke 108. Gleichzeitig bildet die Sicke 108 eine Unterteilung des Kanalbodens 102 in zwei Sektoren 110 und 111, was zur getrennten Führung verschiedenartiger Leitungen dienen kann. - Solche Sicken (auch bei den nachfolgend beschriebenen Beispielen) können insbesondere durch Rollformen, im Tiefziehverfahren oder auch durch mehrmaliges Abkanten hergestellt werden.

Man kann solche Kanalelemente in bekannter Weise auf Konsolen montieren oder auch mit einer Ihrer Seitenwände direkt an einer Wand oder an Säulen bzw. Stützen befestigen. Im letzteren Fall spielt es keine Rolle, ob die erwähnten Sicken (oder andersartige Längsversteifungen) vom Kanalboden nach oben oder nach unten ragen (Innensicken bzw. Aussensicken).

Wie schon erwähnt, kann es erwünscht oder notwendig sein, Kabelkanäle sowohl für elektrische Leitungen als auch für Fluidleitungen mit Belüftungsöffnungen zu versehen, um einen Wärmestau zu vermeiden. Fig. 2 zeigt ein Kanalelement 400, das im Elementboden 402 abwechselnd als Sicken 404 ausgebildete Verformungen und als Belüftungsöffnungen dienende Durchbrüche 406 (Ausstanzungen) aufweist. Die verstärkende Wirkung der Sicken 404 ist die gleiche wie beim vorangehend beschriebenen Beispiel. Die Sicken 404 können sich über die ganze Länge des Kanalelementes 400 erstrecken, während die Durchbrüche 406 natürlich unterbrochen sein müssen. So angeordnete Durchbrüche 406 haben allerdings eine gewisse Schwächung des Kanalelements 400 in Querrichtung zur Folge.

Eine in dieser Beziehung günstigere Lösung zeigt Fig. 3. Das dort dargestellte Kanalelement 500 weist in seinem Elementboden 502 mehrere Reihen 503a, 503b etc. bis 503z von als Sicken 504 ausgebildeten, verstärkenden Verformungen auf, welche fluchtend und abwechselnd mit Durchbrüchen 506 angeordnet sind. Die Sicken 504 und die Durchbrüche 506 benachbarter Reihen 503 sind dabei in Längsrichtung gegeneinander versetzt angeordnet. Damit wird die Schwächung des Querschnittes minimiert, da in jedem Querschnitt nicht nur Durchbrüche 506 sondern auch Sicken 504 vorhanden sind. Ausserdem erhält man eine optimale Belüftung, weil jedes der (nicht dargestellten) Kabel abwechselnd einen Bereich mit einer Sicke 504 und einen Bereich mit einem Durchbruch 506 durchläuft.

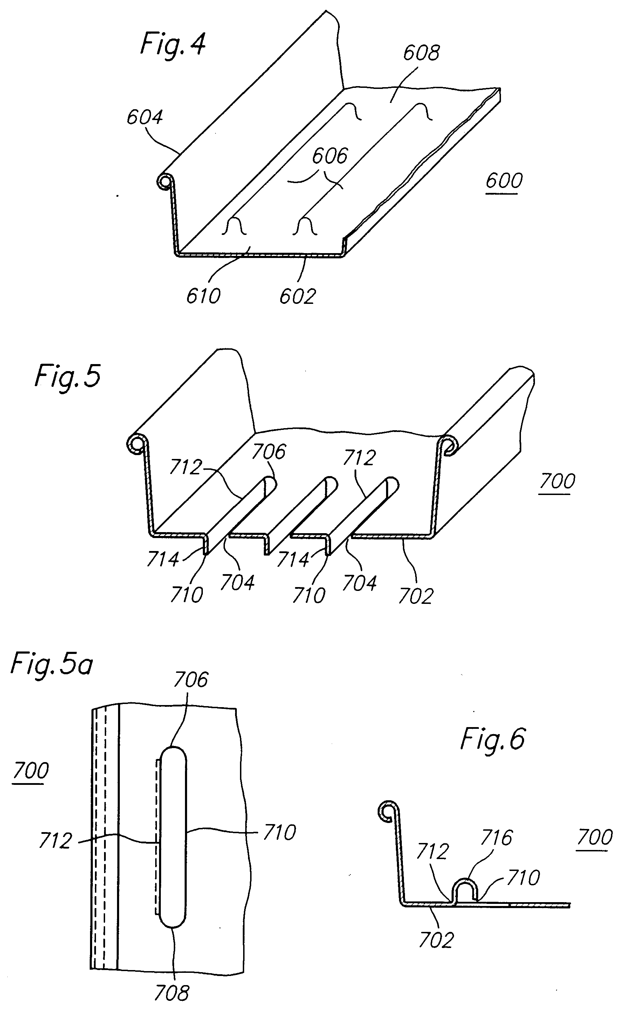

In Fig. 4 ist ein Kanalelement 600 dargestellt, das einen Kanalboden 602 und Kanalwandungen 604 aufweist. Der Kanalboden 602 ist, wie bereits mehrfach erwähnt, mit Sicken 606 versehen. Diese erstrecken sich aber nicht über die gesamte Länge des Kanalelementes 600, indem zwei Endbereiche 608, 610 keine Sicken aufweisen, sondern eben ausgebildet sind. Durch diese Massnahme wird es möglich, längs aneinandergereihte Kanalelemente 600 in gleicher Weise miteinander zu verbinden wie vorbekannte Kanalelemente, die (mit Ausnahme der Sicken) gleich ausgebildet sind. Auf diese Weise können die neuen Kanalelemente auch in Kombination mit bisher üblichen Winkelteilen oder Verzweigungsteilen verwendet werden.

Fig. 5 zeigt ein weiteres Kanalelement 700, bei welchem die verstärkenden Verformungen nicht wie bei den vorangehenden Beispielen durch Sicken gebildet sind. Das Kanalelement 700 besitzt einen Elementboden 702 mit länglichen Durchbrüchen 704. Diese Durchbrüche 704 werden vorzugsweise durch Stanzen erzeugt. Es erfolgt aber nur eine Teilausstanzung der Durchbrüche 704, indem man das Material des Elementbodens nicht längs des ganzen Randes eines Durchbruchs, sondern lediglich im Bereich der Schmalseiten 706, 708 und des einen Längsrandes 710 (Fig. 5a) durchtrennt, ohne auch den anderen Längsrand 712 durchzutrennen. Während oder nach der Teilausstanzung wird ein so erzeugter lappenartiger Bereich 714, der am Längsrand 712 mit dem Elementboden verbunden bleibt, um etwa 90° aus der Ebene des Elementbodens 702 ausgebogen. Der umgebogene Lappen 714 bildet eine Art verstärkender Rippe und übt die gleiche Funktion aus wie die Sicken der Kanalelemente nach Fig. 1 - 4. Um Verletzungen der Kabel (Leitungen) zu vermeiden, erfolgt die Ausbiegung bevorzugt vom Kanalboden 702 nach unten. Verformungen dieser Art sind natürlich in Längsrichtung unterbrochen und vorzugsweise längsversetzt angeordnet.

Eine andere Möglichkeit, welche auch eine Ausbiegung nach oben erlaubt, besteht nach Fig. 6 darin, durch eine Teilstanzung einen verhältnismässig breiten lappenförmigen Bereich 716 zu erzeugen, der im Querschnitt etwa halbkreisförmig verformt und ausgebogen wird. Dabei könnte auch der freie Längsrand 710 so bearbeitet werden, dass er keine Verletzungsgefahr mehr darstellt, oder die Ausbiegung kann so gestaltet werden, dass der Längsrand 710 mit der Unterseite des Kanalbodens 702 gerade bündig ist.

## Patentansprüche

1. Kanalelement für einen Kabelkanal, mit einem Elementboden und mit mindestens einer seitlichen Elementwandung,
dadurch **gekennzeichnet,**
dass das Kanalelement (100; 400; 500; 600; 700) am Elementboden (102; 402; 502; 602; 702) in Kanal-Längsrichtung verlaufende Verformungen (108; 404; 504; 606; 714; 716) aufweist, welche zur Verstärkung gegen eine Längsdurchbiegung des Kanalelementes beitragen.

2. Kanalelement nach Anspruch 1, dadurch gekennzeichnet, dass die Verformungen (108, 606) sich in einem in Längsrichtung gesehen mittigen Bereich des Kanalelementes (100, 600) befinden.

3. Kanalelement nach Anspruch 1, dadurch gekennzeichnet, dass die Verformungen (504, 606) unterbrochen sind und dass in Querrichtung des Elementbodens benachbart angeordnete Verformungen in Längsrichtung gegeneinander versetzt angeordnet sind.

4. Kanalelement nach Anspruch 1, dadurch gekennzeichnet, dass die Verformungen (108; 404; 504; 606) als in der Längsrichtung des Kanals verlaufende Sicken ausgebildet sind.

5. Kanalelement nach den Ansprüchen 3 und 4, dadurch gekennzeichnet, dass zwischen fluchtenden Sicken (404; 504) Durchbrüche (406; 506) angeordnet sind.

6. Kanalelement nach einem der vorangehenden Ansprüche, dadurch gekennzeichnet, dass die Verformungen (108; 404; 504; 606, 716) zum Inneren des Kanalelementes gerichtet sind und eine Unterteilung des Kanalelementes in parallele Sektoren (110, 111) bilden.

7. Kanalelement nach Anspruch 1, dadurch gekennzeichnet, dass die Verformungen als in Längsrichtung verlaufende, teilweise abgetrennte, umgebogene Bereiche (714, 716) des Elementbodens (702) ausgebildet sind.
